# EUROPÄISCHE PATENTANMELDUNG

(11) **EP 4 169 636 A1**
(43) Veröffentlichungstag der Anmeldung: **26.04.2023**
(21) Anmeldenummer: 22197666.5
(22) Anmeldetag: 26.09.2022
(51) Int. Cl.: B21D 19/00, B21D 51/18, B21D 51/26, D06F 37/26, D06F 39/12, F16B 11/00, D06F 37/02, B21D 39/02

(54) **VERFAHREN ZUM HERSTELLEN EINES BEHÄLTERS, BEHÄLTER UND REINIGUNGSGERÄT**

(30) Priorität: 22.10.2021 DE 102021127469
(71) Anmelder: Miele & Cie. KG, 33332 Gütersloh (DE)
(72) Erfinder: Austermann, Robert, 33442 Herzebrock (DE); Krumbiegel, Sven, 33803 Steinhagen (DE)

(57) **Zusammenfassung**

Bei einem Verfahren zum Herstellen eines Behälters (105) für ein Reinigungsgerät wird in einem Schritt des Bereitstellens ein erstes Bauteil (200) mit einem ersten Fügeabschnitt (210) und ein zweites Bauteil (205) mit einem zweiten Fügeabschnitt (215) bereitgestellt, wobei der zweite Fügeabschnitt (215) länger ist als der erste Fügeabschnitt (210). In einem Schritt des Aufbringens wird ein Dichtstoff (250, 275) auf zumindest einen der Fügeabschnitte (210, 215) aufgebracht und in einem Schritt des Umformens wird der zweite Fügeabschnittes (215) um den ersten Fügeabschnitt (210) umgeformt, wobei zumindest ein Hohlraum (285) entsteht, in den der Dichtstoff (275) gepresst wird.

## Beschreibung

Die Erfindung betrifft ein Verfahren zum Herstellen eines Behälters, einen Behälter und ein Reinigungsgerät.

An Waschmaschinen und Waschtrocknern werden Bordierfalzungen als günstiges Fügeverfahren eingesetzt. Diese Bordierungen sind nicht mediendicht herzustellen. Somit ist das Bordierverfahren z.B. für einen Laugenbehälter nicht einsetzbar. Mediendichte Behälter werden entweder verschweißt oder mit Dichtungselementen verschraubt. Eine reine Verklebung des Behälters ist auf Grund der Prozesszeiten kostenintensiv und wirtschaftlich nicht praktikabel.

Der Erfindung stellt sich die Aufgabe, ein verbessertes Verfahren zum Herstellen eines Behälters, einen verbesserten Behälter und ein verbessertes Reinigungsgerät zu schaffen.

Erfindungsgemäß wird diese Aufgabe durch ein Verfahren zum Herstellen eines Behälters, einen Behälter und ein Reinigungsgerät mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass mittels eines Verfahrens eine abgedichtete Bordierung geschaffen werden kann.

Ein Verfahren zum Herstellen eines Behälters für ein Reinigungsgerät weist die folgenden Schritte auf:
Bereitstellen eines ersten Bauteils mit einem ersten Fügeabschnitt und eines zweiten Bauteils mit einem zweiten Fügeabschnitt, wobei der zweite Fügeabschnitt länger ist als der erste Fügeabschnitt;

Aufbringen eines Dichtstoffes auf zumindest einen der Fügeabschnitte; und

Umformen des zweiten Fügeabschnittes um den ersten Fügeabschnitt, wobei zumindest ein Hohlraum entsteht in den der Dichtstoff gepresst wird.

Bei dem Reinigungsgerät kann es sich um ein Gerät zum Behandeln, Reinigen und Trocknen von Textilien handeln, beispielsweise um eine Waschmaschine, einen Waschtrockner oder einen Trockner. Auch kann das Reinigungsgerät beispielsweise ein Geschirrspüler sein. Bei einem Behälter kann es sich beispielsweise um einen Laugenbehälter oder eine Trocknertrommel handeln. Bei dem ersten Bauteil kann es sich beispielsweise um einen Boden des Behälters und bei dem zweiten Bauteil beispielsweise um eine Wand des Behälters handeln. Unter den Fügeabschnitten können beispielsweise Randbereiche der Bauteile verstanden werden, die zum Herstellen einer festen Verbindung zwischen den beiden Bauteilen gebördelt oder bordiert, also zumindest einem zusammengefaltet, werden können. Wenn die Fügeabschnitte umgeformt sind kann durch den Dichtstoff eine mediendichte Verbindung zwischen den Fügeabschnitten und somit den Bauteilen hergestellt werden. Unter der Umformung kann dabei eine Bordierung oder Bördelung verstanden werden. Dazu kann beispielsweise eine bekannte Bördelmaschine verwendet werden. Bei dem Dichtstoff kann es sich um einen Klebstoff handeln oder eine elastische Dichtungsmasse handeln.

Der hier vorgestellte Ansatz kann auch als mediendichte Bordierung einer Wäschebehandlungsmaschine verstanden oder bezeichnet werden. Der Ansatz ermöglicht die Herstellung mediendichter Behälter mit einem einfachen und kostengünstigen Fertigungsverfahren. Es können insbesondere Laugenbehälter und Trocknertrommeln mediendicht hergestellt werden, die für eine sofortige Weiterverarbeitung geeignet sein können.

Im Schritt des Umformens kann der Hohlraum als eine Bordiertasche oder Bördeltasche ausgeformt sein. Eine Bordiertasche oder eine Bördeltasche kann eine für den Dichtstoff genutzte Dichtungszone realisieren.

Im Schritt des Aufbringens des Dichtstoffes kann ein Raupenverfahren und zusätzlich oder alternativ ein Swirlverfahren verwendet werden. Dadurch kann ein gleichmäßiger und durchgängiger Auftrag des Dichtstoffes ermöglicht werden. Das Aufbringen des Dichtstoffes kann automatisiert erfolgen. Dies kann zeitsparend, kostengünstig und mit hoher Qualität erfolgen.

Der Dichtstoff kann als Klebstoff ausgeformt sein. Dadurch können die Bauteile bzw. die Fügeabschnitte zuverlässig formschlüssig und zusätzlich stoffschlüssig und zugleich mediendicht miteinander verbunden werden.

Der erste Fügeabschnitt kann einen ersten Bereich aufweisen und der zweite Fügeabschnitt kann einen ersten Bereich, einen zweiten Bereich und einen zwischen dem ersten Bereich und dem zweiten Bereich angeordneten Umformbereich aufweisen. Im Schritt des Umformens kann der Hohlraum auf Höhe des Umformbereichs des zweiten Fügeabschnittes entstehen. Auf diese Weise kann der erste Bereich des ersten Fügeabschnitts von den Bereichen des zweiten Fügeabschnitts umschlossen werden. Dabei kann ein freies Ende des ersten Fügeabschnitts nach dem Umformen gegenüberliegend zu dem Umformbereich des zweiten Fügeabschnitts angeordnet sein. Der Hohlraum kann an das freie Ende des ersten Fügeabschnitts anschließen. Vorteilhafterweise kann die Verbindung zwischen den Bauteilen durch ein einfaches Umfalten des zweiten Fügeabschnitts realisiert werden.

Der erste Fügeabschnitt kann zusätzlich einen zweiten Bereich aufweisen, wobei zwischen dem ersten Bereich und dem zweiten Bereich des ersten Fügeabschnittes ein Umformbereich angeordnet ist. Der zweite Fügeabschnitt kann einen dritten Bereich aufweisen, wobei zwischen dem zweiten Bereich und dem dritten Bereich des zweiten Fügeabschnittes ein weiterer Umformbereich angeordnet ist. Im Schritt des Aufbringens kann ein weiterer Dichtstoff auf zumindest einen der Fügeabschnitte aufgebracht werden. Im Schritt des Umformens kann der erste Fügeabschnitt und der zweite Fügeabschnitt auf Höhe des Umformbereiches des ersten Fügeabschnittes und des weiteren Umformbereiches des zweiten Fügeabschnittes umgeformt werden, wobei ein weiterer Hohlraum auf Höhe des Umformbereiches des ersten Fügeabschnittes entstehen. Der weitere Dichtstoff kann in den weiteren Hohlraum gepresst werden. Durch zwei Dichtungsabschnitte und zweimaliges Umfalten kann eine hohe Mediendichtigkeit des Behälters erreicht werden. Entsprechend können die Fügeabschnitte zumindest ein weiteres mal umgefaltet werden, wobei für den dadurch entstehenden Hohlraum vor dem Umformen entsprechender weiterer Dichtstoff aufgebracht werden kann.

Im Schritt des Bereitstellens kann das erste Bauteil als ein Boden bereitgestellt werden und das zweite Bauteil als eine Wand bereitgestellt werden. Dadurch kann eine gängige Behälterform realisiert werden.

Ein Behälter für ein Reinigungsgerät kann ein erstes Bauteil mit einem ersten Fügeabschnitt und ein zweites Bauteil mit einem zweiten Fügeabschnitt umfassen, wobei der zweite Fügeabschnitt um den ersten Fügeabschnitt und einen Hohlraum umgeformt ist. Ein Dichtstoff ist in dem Hohlraum angeordnet.

Beispielsweise kann der erste Fügeabschnitt einen ersten Bereich aufweisen und der zweite Fügeabschnitt einen ersten Bereich und einen zweiten Bereich aufweisen, wobei zwischen dem ersten Bereich und dem zweiten des zweiten Fügeabschnittes ein Umformbereich angeordnet ist und wobei der erste Bereich des ersten Fügeabschnittes zwischen dem zweiten Bereich des zweiten Fügeabschnittes und dem ersten Bereich des zweiten Fügeabschnittes angeordnet ist. Zwischen dem Umformbereich des zweiten Fügeabschnittes und einem Ende des ersten Bereiches des ersten Fügeabschnittes kann der Hohlraum angeordnet und der Dichtstoff kann in dem Hohlraum angeordnet sein.

Gemäß einer Ausführungsform kann der erste Fügeabschnitt ferner einen zweiten Bereich aufweisen und der zweite Fügeabschnitt kann einen dritten Bereich aufweisen, wobei zwischen dem zweiten Bereich und dem dritten Bereich des zweiten Fügeabschnittes ein weiterer Umformbereich angeordnet sein kann. Der zweite Bereich des ersten Fügeabschnittes kann zwischen dem ersten Bereich des zweiten Fügeabschnittes und dem dritten Bereich des zweiten Fügeabschnittes angeordnet sein, wobei zwischen dem Umformbereich des ersten Fügeabschnittes und einem Ende des ersten Bereichs des zweiten Fügeabschnittes ein weiterer Hohlraum angeordnet sein und wobei ein weiterer Dichtstoff in dem weiteren Hohlraum angeordnet sein kann.

Der Behälter kann als ein Laugenbehälter oder eine Trocknertrommel ausgeformt sein und beispielsweise als Ersatz für bekannte entsprechende Behälter verwendet werden.

Ein Reinigungsgerät kann einen entsprechenden Behälter aufweisen, wobei das Reinigungsgerät beispielsweise als eine Waschmaschine, ein Waschtrockner oder ein Trockner ausgeformt sein kann.

Auch wenn der beschriebene Ansatz anhand eines Haushaltgeräts beschrieben wird, kann das hier beschriebene Verfahren entsprechend im Zusammenhang mit einem gewerblichen oder professionellen Gerät, beispielsweise einem medizinischen Gerät, wie einem Reinigungs- oder Desinfektionsgerät, einem Kleinsterilisator, einem Großraumdesinfektor oder einer Container-Waschanlage eingesetzt werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Reinigungsgerätes gemäß einem Ausführungsbeispiel;
- Figur 2: eine schematische Teildarstellung eines Behälters gemäß einem Ausführungsbeispiel; und
- Figur 3: ein Ablaufdiagramm eines Verfahrens zum Herstellen eines Behälters für ein Reinigungsgerät gemäß einem Ausführungsbeispiel.

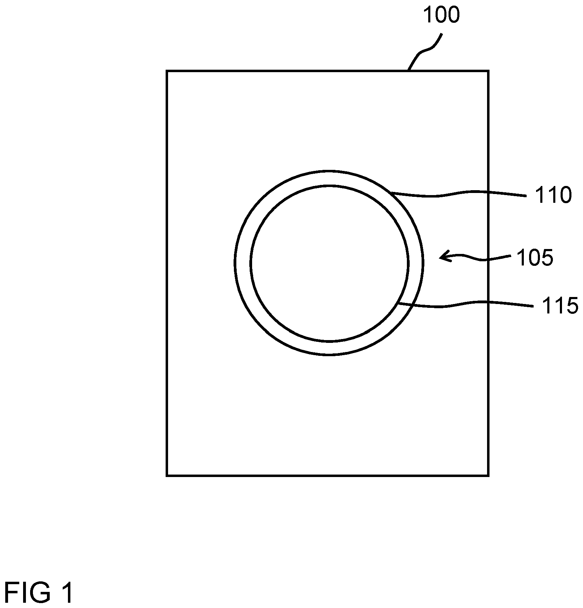

Figur 1 zeigt eine schematische Darstellung eines Reinigungsgerätes 100 gemäß einem Ausführungsbeispiel. Beispielhaft ist das Reinigungsgerät 100 als Waschmaschine ausgeführt. Das Reinigungsgerät 100 weist zumindest einen Behälter 105 auf. Der Behälter 105 ist beispielhaft als ein Laugenbehälter 110 oder als eine Trommel 115, beispielsweise eine Waschtrommel oder Trocknertrommel, ausgeführt.

Der Behälter 105 ist aus zumindest zwei Bauteilen zusammengesetzt, die über eine Falzverbindung verbunden sind. Zur Abdichtung ist innerhalb einer entsprechenden Falzung ein Dichtstoff angeordnet.

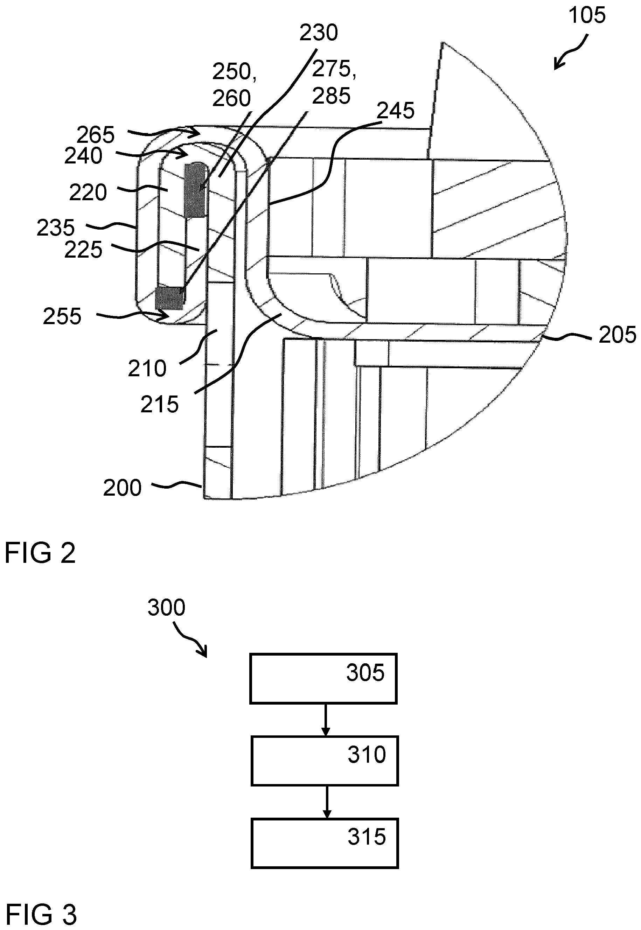

In den nachfolgenden Figuren 2 und 3 wird ein Verfahren zum Herstellen eines entsprechenden Behälters 105 näher erläutert.

Figur 2 zeigt eine schematische Teildarstellung einer Behälters 105 eines Reinigungsgerätes gemäß einem Ausführungsbeispiel. Dabei handelt es sich beispielsweise um den in Figur 1 beschriebene Behälter 105 oder einen ähnlichen Behälter.

Der Behälter 105 weist ein erstes Bauteil 200 und ein zweites Bauteil 205 auf. Das erste Bauteil 200 weist einen ersten Fügeabschnitt 210 auf und das zweite Bauteil 205 weist einen zweiten Fügeabschnitt 215 auf. Das erste Bauteil 200 ist beispielsweise als ein Boden ausgeformt und das zweite Bauteil 205 als eine Wand ausgeformt. Zur Herstellung einer Verbindung zwischen den Bauteilen 200, 205 werden die Bauteile 200, 205 so aneinandergesetzt, dass die Fügeabschnitte 210, 215 direkt aneinandergrenzen. Bei den Fügeabschnitten 210, 215 handelt es sich beispielsweise um umlaufende Randbereiche der Bauteile 200, 205.

Gemäß einem Ausführungsbeispiel ist der zweite Fügeabschnitt 215 länger als der erste Fügeabschnitt 210.

Der erste Fügeabschnitt 210 weist einen ersten Bereich 220 und einen zweiten Bereich 230 auf. Zwischen dem ersten Bereich 220 und dem zweiten Bereich 230 ist ein Umformbereich 240 angeordnet.

Der zweite Fügeabschnitt 215 weist einen ersten Bereich 225, einen zweiten Bereich 235 und einen dritten Bereich 245 auf. Zwischen dem ersten Bereich 225 und dem zweiten Bereich 235 des zweiten Fügeabschnittes 215 ist ein Umformbereich 255 angeordnet. Zwischen dem zweiten Bereich 235 und dem dritten Bereich 245 des zweiten Fügeabschnittes 215 ist ein weiterer Umformbereich 265 angeordnet.

Der erste Fügeabschnitt 210 und der zweite Fügeabschnitt 215 werden während der Herstellung des Bauteils 105 im Bereich der Umformungsbereiche 240, 255 und im Bereich des weiteren Umformungsbereichs 265 umgeformt. Dabei werden der erste Fügeabschnitt 210 und der zweite Fügeabschnitt 215 zu einem Umschlag umgeformt. Beispielsweise werden die Fügeabschnitte 210, 215 mittels einer Bordierung und/oder einer Bördelung umgeformt.

Vor dem Umformen wird ein Dichtstoff 275, beispielsweise auf eine Wand des zweiten Fügeabschnitts 215 aufgebracht und ein weiterer Dichtstoff 250 auf eine Wand des ersten Fügeabschnitts 210. Beispielsweise wird der Dichtstoff 275 auf Höhe des Umformbereiches 255 des zweiten Fügeabschnittes 215 aufgebracht und der weitere Dichtstoff 250 auf Höhe des Umformbereiches 240 des ersten Fügeabschnittes 210. Zusätzlich oder alternativ wird der Dichtstoff 275 auf ein freies Ende des ersten Fügeabschnitts 210 und der weitere Dichtstoff 250 auf ein freies Ende des zweiten Fügeabschnitts 215 aufgebracht.

Das Aufbringen des Dichtstoffes 275 und des weiteren Dichtstoffes 250 erfolgt beispielsweise mittels eines Raupenverfahrens oder eines Swirlverfahrens. Dabei wird gemäß einem Ausführungsbeispiel eine durchgängige Dichtstofflinie erzeugt. Nach Aufbringen des Dichtstoffes 250, 275 werden die Fügeabschnitte 210, 215 zusammengefügt, um sie in einem nächsten Schritt umzuformen.

Beim Umformen wird zunächst der zweite Fügeabschnitt 215 um den ersten Fügeabschnitt 210 geformt. Dabei wird der erste Bereich 225 des zweiten Fügeabschnittes 215 um den ersten Bereich 220 des ersten Fügeabschnittes 210 geformt. Hierbei entsteht ein Hohlraum 285 auf Höhe des Umformbereichs 255 des zweiten Fügeabschnittes 215 und der Dichtstoff 275 wird in den Hohlraum 285 gepresst. Diese Umformung der Fügeabschnitte 210, 215 reicht bereits aus, um einen mediendichten Behälter 105 herzustellen. Bei einer weiteren Umformung, wie sie im nächsten Absatz beschrieben ist, wird der Behälter 105 noch mediendichter hergestellt.

Beim weiteren Umformen werden der erste Fügeabschnitt 210 und der zweite Fügeabschnitt 215 auf Höhe des Umformbereiches 240 des ersten Fügeabschnittes 210 und des weiteren Umformbereiches 265 des zweiten Fügeabschnittes 215 umgeformt. Dabei entsteht ein weiterer Hohlraum 260 auf Höhe des Umformbereiches 240 des ersten Fügeabschnittes 210. Der weitere Dichtstoff 250 wird dabei in den weiteren Hohlraum 260 gepresst.

Nach dem Umformen ist der erste Bereich 225 des ersten Fügeabschnittes 210 zwischen dem zweiten Bereich 235 des zweiten Fügeabschnittes 215 und dem ersten Bereich 225 des zweiten Fügeabschnittes 215 angeordnet. Zwischen dem Umformbereich 255 des zweiten Fügeabschnittes 215 und einem Ende des ersten Bereiches 220 des ersten Fügeabschnittes 210 ist der Hohlraum 285 angeordnet. Der Dichtstoff 275 ist in dem Hohlraum 285 angeordnet.

Der zweite Bereich 230 des ersten Fügeabschnittes 210 ist zwischen dem ersten Bereich 225 des zweiten Fügeabschnittes 215 und dem dritten Bereich 245 des zweiten Fügeabschnittes 215 angeordnet. Zwischen dem Umformbereich 240 des ersten Fügeabschnittes 210 und einem Ende des ersten Bereichs 225 des zweiten Fügeabschnittes 215 ist der weitere Hohlraum 260 angeordnet. Der weitere Dichtstoff 250 ist in dem weiteren Hohlraum 260 angeordnet.

Die Hohlräume 260, 285 sind beispielhaft als eine Bordiertasche oder Bördeltasche ausgeformt. Die Dichtstoffe 250, 275 sind beispielhaft als Klebstoff ausgeformt.

Die Dichtstoffe 250, 275 verhärten sich gemäß einem Ausführungsbeispiel in den Hohlräumen 260, 285. Nach der Aushärtung der Dichtstoffe 250, 275 sind die Fügeabschnitte 210, 215 mediendicht miteinander verbunden und eine Weiterverarbeitung der Bauteile 200, 205 bzw. des Behälters 205 ist möglich. Beispielsweise formen die Dichtstoffe 250, 275 jeweils einen geschlossenen Dichtstoffring aus, der sich innerhalb eines Umformbereichs der Fügeabschnitte 210, 215 befindet.

Auf entsprechende Weise können die Fügeabschnitte 210, 215 ein oder mehrere weitere Male umgeschlagen werden, wobei optional in dem oder den dadurch entstehenden weiteren Hohlräumen weiterer Dichtstoff angeordnet sein kann.

Gemäß einem Ausführungsbeispiel ist der Behälter 105, beispielsweise ein Laugenbehälter 110 oder eine Trocknertrommel 115, aus mehreren Bauteilen, hier zumindest den Bauteilen 200, 205 hergestellt. Diese entsprechenden Bauteile 200, 205, wie Wand und Boden, die auch als Zarge und Boden/Kappe bezeichnet werden können, weisen für das Bordieren eine entsprechende Geometrie auf. In diese für die Bordierung notwendige Geometrie wird in einem zusätzlichen Arbeitsschritt ein entsprechender Klebstoff und/oder Dichtstoff 250, 275 unmittelbar vor einer Bordierstation aufgebracht. Der Auftrag kann im Raupenverfahren oder Swirlverfahren aufgebracht werden. Anschließend werden die Bauteile 200, 205, beispielsweise Wand und Boden, gefügt und mit Hilfe des Bordierprozesses wird der Dichtstoff 250, 275 verfahrensbedingt in die entstehenden Hohlräume 260, 285, die auch als Bordiertaschen bezeichnet werden können, durch den Bordierrollprozess gepresst. Die prozessbedingten Hohlräume 260, 285 ermöglichen die Herstellung der klebtechnisch notwendigen Dichtungszonen. Die dadurch entstehende Bordierung bzw. Falzung ist nach der Aushärtung des Dichtstoffes 250, 275 im Bereich der Hohlräume 260, 285 mediendicht. Eine sofortige Weiterverarbeitung ist möglich, da die mechanische Festigkeit durch die Bordierung gewährleistet ist.

Fig. 3 zeigt ein Ablaufdiagramm eines Verfahrens 300 zum Herstellen eines Behälters für ein Reinigungsgerät gemäß einem Ausführungsbeispiel.

Das Verfahren 300 weist einen Schritt 305 des Bereitstellens eines ersten Bauteils und eines zweiten Bauteils auf. Das erste Bauteil weist einen ersten Fügeabschnitt und das zweite Bauteil einen zweiten Fügeabschnitt auf.

Ferner weist das Verfahren 300 einen Schritt 310 des Aufbringens eines Dichtstoffes auf. Der Dichtstoff wird auf zumindest einen der Fügeabschnitte aufgebracht. Gemäß einem Ausführungsbeispiel wird im Schritt 310 der Dichtstoff auf den zweiten Fügeabschnitt aufgebracht und/oder ein weiterer Dichtstoff auf den ersten Fügeabschnitt aufgebracht.

In einem Schritt 315 des Umformens wird der zweite Fügeabschnittes um den ersten Fügeabschnitt geformt. Genauer gesagt werden die Fügeabschnitte zu einem Umschlag geformt. Dabei entsteht zumindest ein Hohlraum auf Höhe eines Umformbereichs des zweiten Fügeabschnittes und der Dichtstoff wird in den Hohlraum gepresst.

Gemäß einem Ausführungsbeispiel entsteht im Schritt 315 ein weiterer Hohlraum auf Höhe eines Umformbereiches des ersten Fügeabschnittes und der weitere Dichtstoff wird in den weiteren Hohlraum gepresst.

## Patentansprüche

1. Verfahren (300) zum Herstellen eines Behälters (105) für ein Reinigungsgerät (100), wobei das Verfahren (300) die folgenden Schritte aufweist:
Bereitstellen (305) eines ersten Bauteils (200) mit einem ersten Fügeabschnitt (210) und eines zweiten Bauteils (205) mit einem zweiten Fügeabschnitt (215), wobei der zweite Fügeabschnitt (215) länger ist als der erste Fügeabschnitt (210);
Aufbringen (310) eines Dichtstoffes (250, 275) auf zumindest einen der Fügeabschnitte (210, 215); und
Umformen (315) des zweiten Fügeabschnittes (215) um den ersten Fügeabschnitt (210), wobei zumindest ein Hohlraum (260, 285) entsteht in den der Dichtstoff (250, 275) gepresst wird.

2. Verfahren (300) gemäß Anspruch 1, wobei im Schritt (315) des Umformens der Hohlraum (285) als eine Bordiertasche oder Bördeltasche ausgeformt wird.

3. Verfahren (300) gemäß einem der vorangegangenen Ansprüche, wobei im Schritt (310) des Aufbringens des Dichtstoffes (250, 275) ein Raupenverfahren und/oder ein Swirlverfahren verwendet wird.

4. Verfahren (300) gemäß einem der vorangegangenen Ansprüche, wobei der Dichtstoff (250, 275) als Klebstoff ausgeformt ist.

5. Verfahren (300) gemäß einem der vorangegangenen Ansprüche, bei dem der erste Fügeabschnitt (210) einen ersten Bereich (220) aufweist und bei dem der zweite Fügeabschnitt (215) einen ersten Bereich (225), einen zweiten Bereich (235) und einen zwischen dem ersten Bereich (225) und dem zweiten Bereich (235) angeordneten Umformbereich (255) aufweist, und wobei im Schritt des Umformens (315) der Hohlraum (285) auf Höhe des Umformbereichs (255) des zweiten Fügeabschnittes (215) entsteht.

6. Verfahren (300) gemäß Anspruch 5, bei dem der erste Fügeabschnitt (210) einen zweiten Bereich (230) und eine zwischen dem ersten Bereich (220) und dem zweiten Bereich (230) des ersten Fügeabschnittes (210) angeordneten Umformbereich (240) aufweist, und bei dem der zweite Fügeabschnitt (215) einen dritten Bereich (245) und einen zwischen dem zweiten Bereich (235) und dem dritten Bereich (245) des zweiten Fügeabschnittes (215) angeordneten weiteren Umformbereich (265) aufweist, wobei im Schritt (310) des Aufbringens ein weiterer Dichtstoff (250) auf zumindest einen der Fügeabschnitte (210, 215) aufgebracht wird und wobei im Schritt (315) des Umformens der erste Fügeabschnitt (210) und der zweite Fügeabschnitt (215) auf Höhe des Umformbereiches (240) des ersten Fügeabschnittes (210) und des weiteren Umformbereiches (265) des zweiten Fügeabschnittes (215) umgeformt werden, wobei ein weiterer Hohlraum (260) auf Höhe des Umformbereiches (240) des ersten Fügeabschnittes (210) entsteht, wobei der weitere Dichtstoff (250) in den weiteren Hohlraum (260) gepresst wird.

7. Verfahren (300) gemäß einem der vorangegangenen Ansprüche, wobei im Schritt (305) des Bereitstellens das erste Bauteil (200) als ein Boden bereitgestellt wird und wobei das zweite Bauteil (205) als eine Wand bereitgestellt wird.

8. Behälter (105) für ein Reinigungsgerät (100), wobei der Behälter (105) die folgenden Merkmale aufweist:
ein erstes Bauteil (200) mit einem ersten Fügeabschnitt (210);
ein zweites Bauteil (205) mit einem zweiten Fügeabschnitt (215), wobei der zweite Fügeabschnitt (215) um den ersten Fügeabschnitt (210) und einem Hohlraum umgeformt ist; und
ein Dichtstoff, der in dem Hohlraum (285) angeordnet ist.

9. Behälter (105) gemäß Anspruch 8, wobei das erste Bauteil (200) einen ersten Fügeabschnitt (210) aufweist und wobei das zweite Bauteil (205) einen zweiten Fügeabschnitt (215) aufweist, wobei der erste Fügeabschnitt (210) einen ersten Bereich (220) aufweist und der zweite Fügeabschnitt (215) einen ersten Bereich (225) und einen zweiten Bereich (235) aufweist, wobei zwischen dem ersten Bereich (225) und dem zweiten Bereich (235) des zweiten Fügeabschnittes (215) ein Umformbereich (255) angeordnet ist, wobei der erste Bereich (220) des ersten Fügeabschnittes (210) zwischen dem zweiten Bereich (235) des zweiten Fügeabschnittes (215) und dem ersten Bereich (225) des zweiten Fügeabschnittes (215) angeordnet ist, wobei zwischen dem Umformbereich (255) des zweiten Fügeabschnittes (215) und einem Ende des ersten Bereiches (220) des ersten Fügeabschnittes (210) der Hohlraum (285).

10. Behälter (105) gemäß Anspruch 9, wobei der erste Fügeabschnitt (210) einen zweiten Bereich (230) aufweist und der zweite Fügeabschnitt (215) einen dritten Bereich (245) aufweist, wobei zwischen dem zweiten Bereich (235) und dem dritten Bereich (245) des zweiten Fügeabschnittes (215) ein weiterer Umformbereich (265) angeordnet ist, wobei der zweite Bereich (220) des ersten Fügeabschnittes (210) zwischen dem ersten Bereich (225) des zweiten Fügeabschnittes (215) und dem dritten Bereich (245) des zweiten Fügeabschnittes (215) angeordnet ist, wobei zwischen dem Umformbereich (240) des ersten Fügeabschnittes (210) und einem Ende des ersten Bereichs (225) des zweiten Fügeabschnittes (215) ein weiterer Hohlraum (260) angeordnet ist und wobei ein weiterer Dichtstoff (250) in dem weiteren Hohlraum (260) angeordnet ist.

11. Behälter (105) gemäß einem der Ansprüche 8 bis 10, wobei der Behälter (105) als ein Laugenbehälter (110) oder eine Trocknertrommel (115) ausgeformt ist.

12. Reinigungsgerät (100) mit einem Behälter (105) gemäß einem der Ansprüche 8 bis 10, wobei das Reinigungsgerät (100) als eine Waschmaschine, ein Waschtrockner oder ein Trockner ausgeformt ist.
